Europäisches Patentamt

European Patent Office

Office européen des brevets

(19)

(11) Veröffentlichungsnummer: **0 211 270 B1**

(12) **EUROPÄISCHE PATENTSCHRIFT**

(45) Veröffentlichungstag der Patentschrift: **24.07.91**

(21) Anmeldenummer: **86109479.5**

(22) Anmeldetag: **11.07.86**

(51) Int. Cl.5: **C08G 18/12**, C08G 18/78, C08G 18/30, C08G 18/66, C08G 18/50

(54) Verwendung von Harnstoff- und/oder Biuretgruppen aufweisenden Polyisocyanat-Zubereitungen, als Isocyanatkomponente bei der Herstellung von Kunststoffen nach dem Isocyanat-Polyadditionsverfahren.

(30) Priorität: **23.07.85 DE 3526233**

(43) Veröffentlichungstag der Anmeldung:
**25.02.87 Patentblatt 87/09**

(45) Bekanntmachung des Hinweises auf die Patenterteilung:
**24.07.91 Patentblatt 91/30**

(84) Benannte Vertragsstaaten:
**BE DE FR GB IT NL SE**

(56) Entgegenhaltungen:
**FR-A- 1 308 345**  **FR-A- 1 358 183**
**FR-A- 2 311 813**  **FR-A- 2 350 367**
**US-A- 3 236 815**  **US-A- 3 441 588**
**US-A- 3 649 600**  **US-A- 4 153 777**

(73) Patentinhaber: **BAYER AG**

**W-5090 Leverkusen 1 Bayerwerk(DE)**

(72) Erfinder: **Rasshofer, Werner, Dr.**
**Leopold-Gmelin-Strasse 31**
**W-5000 Koeln 80(DE)**
Erfinder: **Paul, Reiner, Dr.**
**Oberhausener Strasse 155**
**W-4330 Mülheim-Ruhr(DE)**

**Beschreibung**

Die Erfindung betrifft die Verwendung von neuen Harnstoff- und/oder Biuretgruppen aufweisenden Polyisocyanat-Zubereitungen bei der Herstellung von Formkunststoffen nach der Reaktionsspritzgußtechnik.

Die Herstellung von urethanmodifizierten Polyisocyanat-Zubereitungen, d.h. von endständige Isocyanatgruppen aufweisenden Prepolymeren bzw. Semiprepolymeren, insbesondere auf Basis von Polyisocyanaten bzw. Polyisocyanatgemischen der Diphenylmethanreihe (4,4'-Diisocyanatodiphenylmethan, dessen Gemische mit 2,4'- und gegebenenfalls 2,2'-Diisocyanatodiphenylmethan oder Phosgenierungsprodukte von Anilin/Formaldehyd-Kondensaten, die neben diesen Diisocyanaten deren höhere Homologe enthalten) und den unterschiedlichen Polyhydroxylverbindungen ist bekannt (vgl. z.B. EP-A-10 850 oder 66 130: DE-OS 2 347 207, 2 404 166, 2 513 793, 2 513 796, 2 620 222, 2 622 104, 2 732 182, 2 737 338, 2 804 375, 2 810 596, 2 815 579 oder 2 913 126: US-PS 3 644 457, 4 055 548, 4 234 714 oder 4 321 333, sowie GB-PS 1 369 334).

Bei den Verfahren dieser Vorveröffentlichungen geht es im allgemeinen um die Verflüssigung von bei Raumtemperatur festem Diisocyanatodiphenylmethan, insbesondere 4,4'-Diisocyanatodiphenylmethan oder um die Verminderung der Kristallisationsneigung von bei Raumtemperatur flüssigen Polyisocyanatgemischen der Diphenylmethanreihe während der Lagerung bei tiefen Temperaturen.

Bei der Prepolymerisierung bzw. Semiprepolymerisierung von Polyisocyanaten mit Polyolen müssen jedoch, was Struktur und Molekulargewicht dieser Polyole betrifft, zur Erreichung eines verflüssigenden Effekts einige Kompromisse eingegangen werden, so daß Polyhydroxylverbindungen, die in den aus den Polyisocyanat-Zubereitungen hergestellten Polyurethan-Kunststoffen die besten mechanischen Werte ergeben, oftmals zur Prepolymerisierung bzw. Semiprepolymerisierung nicht eingesetzt werden können. Von Nachteil ist auch vor allem, daß die in den Prepolymeren bzw. Semiprepolymeren vorliegenden Urethangruppen im Vergleich zu Harnstoff- oder Amidgruppen thermisch nur gering beanspruchbar sind, so daß die aus den Prepolymeren bzw. Semiprepolymeren hergestellten, vorwiegend Urethangruppen aufweisenden Kunststoffe bei erhöhten Temperaturen im allgemeinen schlechtere mechanische Eigenschaften aufweisen, als vergleichbare Kunststoffe, in denen anstelle der Urethangruppen oder zumindest anstelle eines Teils der Urethangruppen Harnstoffgruppen vorliegen.

Harnstoff- und/oder Biuret-Bindungen enthaltende Polyisocyanate sind ebenfalls bekannt (vgl. z.B. "Polyurethanes", Chemistry and Technology, Part 1, von Saunders und Frisch, Interscience Publishers (1962), Seiten 190 ff). So lehrt die DE-PS 1 215 365 die Herstellung von höhermolekularen Polyisocyanaten mit Biuretstruktur durch Umsetzung von mindestens 3 Mol eines organischen Diisocyanats mit 1 Mol eines ω,ω'-Diaminopolyethers vom durchschnittlichen Molekulargewicht 200 bis 6.000, dem gegebenenfalls eine kleine Menge eines entsprechenden ω,ω'-Dihydroxy- oder eines ω-Hydroxy-ω'-amino-polyethers beigemischt sein kann. In der GB-PS 1 078 390 wird die Herstellung von flüssigen Polyisocyanat-Kompositionen durch Erhitzen eines organischen Diisocyanats mit einer Lösung eines aromatischen Diamins in einem organischen Solvens auf 150 bis 200 °C während 1 bis 4 h beschrieben.

In der DE-PS 1 101 394 wird ein Verfahren zur Herstellung von Biuretpolyisocyanaten durch Umsetzung von mindestens 3 mol eines Diisocyanats mit 1 mol Wasser beschrieben. Isocyanatkompositionen, die neben Biuret- und Harnstoffgruppen noch Urethangruppen aufweisen, können auch durch Reaktion von Mischungen aus Ketonen und Di- bzw. Polyaminen mit Di- bzw. Polyisocyanaten gemäß GB-PS 1 263 609 erhalten werden. Aus der DE-OS 2 902 469 sind bei Raumtemperatur flüssige oder pastenförmige oder durch Erwärmen auf 80 °C verflüssigbare Suspensionen von Isocyanatoharnstoffen bekannt, die so hergestellt werden, daß man aromatische Diisocyanate mit Isocyanatprepolymeren vermischt und anschließend das Gemisch mit 0,4-0,8 mol Wasser pro mol des aromatischen Diisocyanates oder einer entsprechenden Menge einer wasserabspaltenden Verbindung zur Reaktion bringt. Flüssige, diprimäre aromatische Diamine, deren Reaktivität gegenüber Isocyanaten durch elektrophile oder sterisch hindernde Substituenten vermindert ist, werden nach DE-OS 1 963 190 mit Polyisocyanaten zu stabilen, flüssigen, Biuretgruppen aufweisenden Polyisocyanaten umgesetzt. Nach DE-OS 2 010 887 werden Mono- und Polyamine mit sekundären Aminogruppen zur Herstellung von flüssigen Biuretgruppen aufweisenden Polyisocyanaten bei 80 bis 200 °C miteinander umgesetzt; nach DE-OS 2 032 547 entstehen aus diesen Ausgangskomponenten bei einer Temperatur von -20 bis +80 °C flüssige, Harnstoffgruppen enthaltende Isocyanate. Die DE-OS 2 261 065 beschreibt die Umsetzung von organischen Polyisocyanaten mit unterschüssigen Mengen an aliphatischen oder cycloaliphatischen Diaminen zu den entsprechenden Biuretgruppen aufweisenden Polyisocyanaten. Gemäß DE-OS 3 003 543 werden Harnstoff-modifizierte Polyisocyanate durch Umsetzung von einfachen Polyisocyanaten mit unterschüssigen Mengen an Polyaminen mit mehr als drei nicht aromatisch gebundenen Aminogruppen erhalten. Gemäß DE-OS 3 114 638 werden spezielle Diisocyanate und/oder Diamine mit aromatisch gebundenen Isocyanat- bzw. Aminogruppen zur Herstellung von Harnstoff- und/oder

EP 0 211 270 B1

Biuretgruppen aufweisen aromatischen Polyisocyanaten verwendet. Die US-PS 3 906 019 beschreibt die Herstellung von Di-(isocyanatotolyl)-harnstoff durch Umsetzung von Toluylendiisocyanat mit Wasser in überschüssigem Toluoldiisocyanat. Es wurden Materialien mit Schmelzpunkten im Bereich 170-180° C erhalten, die in Toluylendiisocyanat extrem unlöslich sind

Die Verfahrensprodukte dieser Vorveröffentlichungen haben indessen insbesondere für die Herstellung von halbharten, gegebenenfalls geschäumten, elastomeren Formkunststoffen, wie sie nach der Reaktionsspritzgußtechnik erhalten werden können, keine Bedeutung erlangt.

Es war die Aufgabe der vorliegenden Erfindung, Harnstoff- und/oder Biuretgruppen aufweisende Polyisocyanat-Zubereitungen zur Verfügung zu stellen, die als Isocyanatkomponente besonders gute Formkunststoffe liefern.

Diese Aufgabe konnte überraschenderweise durch die nachstehend näher beschriebenen Zubereitungen gelöst werden, die aus bestimmten höhermolekularen Verbindungen mit gegenüber Isocyanatgruppen reaktionsfähigen Gruppen, insbesondere Aminogruppen, mit Wasser und gegebenenfalls bestimmten niedermolekularen Verbindungen mit gegenüber Isocyanatgruppen reaktionsfähigen Gruppen, insbesondere Aminogruppen, mit überschüssigen Mengen an organischen Polyisocyanaten hergestellt werden und als Isocyanatkomponente überraschend gute Formkunststoffe liefern.

Gegenstand der Erfindung ist die Verwendung von Harnstoff- und/oder Biuretgruppen aufweisenden Polyisocyanat-Zubereitungen, die einen NCO-Gehalt von 0,7 bis 45 Gew.-% aufweisen und die hergestellt werden, indem man

A) organische Polyisocyanate mit einem NCO-Gehalt von 10 bis 50 Gew.-% oder Gemische von organischen Polyisocyanaten mit einem NCO-Gehalt von 10 bis 50 Gew.-% mit

B) organischen Verbindungen mit gegenüber Isocyanatgruppen reaktionsfähigen Gruppen und

C) Wasser umsetzt, wobei die Komponenten A), B) und C)

unter Einhaltung eines Äquivalentverhältnisses von Isocyanatgruppen der Komponente A) zu gegenüber Isocyanatgruppen reaktionsfähigen Gruppen der Komponenten B) und C) von 4:1 bis 50:1, und eines Äquivalentverhältnisses der gegenüber Isocyanatgruppen reaktionsfähigen Gruppen der Komponenten B) und C) von 1:0,1 bis 1:10 umgesetzt werden, wobei die Komponente B) aus

B1) im Sinne der Isocyanat-Additionsreaktion mindestens difunktionellen Polyethern oder Polyestern des Molekulargewichtsbereichs 500 bis 20 000 mit alkoholischen, an primäre und/oder sekundäre Kohlenstoffatome gebundene Hydroxylgruppen und/oder mit aromatisch und/oder (cyclo)aliphatisch gebundenen, primären und/oder sekundären Aminogruppen oder aus Gemischen derartiger Verbindungen gegebenenfalls in Abmischung mit

B2) organischen Verbindungen des Molekulargewichtsbereichs 60 bis 499 mit mindestens zwei gegenüber Isocyanatgruppen reaktionsfähigen Gruppen

besteht, wobei ein Äquivalentverhältnis, bezogen auf die gegenüber Isocyanatgruppen reaktionsfähigen Gruppen von (B1 + C):B2 von 1:0 bis 1:10 und von B1:B2 von 1:0 bis 1:5 eingehalten wird, und wobei die gegebenenfalls mitverwendete Komponente B2) ausgewählt ist aus der Gruppe bestehend aus

a) aromatischen Di- oder Triaminen des Molekulargewichts 108 bis 499 mit primären oder sekundären Aminogruppen,

b) (cyclo)aliphatischen Di- und/oder Triaminen des Molekulargewichtsbereichs 60 bis 499 mit primären und/oder sekundären Aminogruppen,

c) organischen Verbindungen des Molekulargewichtsbereichs 61 bis 499, die im Sinne der Isocyanat-Additionsreaktion mindestens difunktionell sind und die sowohl (i) mindestens eine aromatisch und/oder (cyclo)aliphatisch gebundene primäre und/oder sekundäre Aminogruppe, als auch (ii) mindestens eine alkoholische, an ein primäres oder sekundäres Kohlenstoffatom gebundene Hydroxylgruppe aufweisen,

d) mindestens zweiwertigen, gegebenenfalls Ether- oder Estergruppen aufweisenden Alkoholen des Molekulargewichtsbereichs 60 bis 499

e) Hydrazin und seinen Derivaten, soweit sie mindestens zwei reaktive NH-Gruppen aufweisen, und

f) beliebigen Gemischen der unter a) bis e) genannten Verbindungen,

als Isocyanatkomponente bei der Herstellung von Formkunststoffen auf Basis von Polyisocyanat-Additionsprodukten einer Dichte von 0,8 bis 1,4 g/cm$^3$ nach der Reaktionsspritzgußtechnik.

Als Polyisocyanate (Komponente A) können beliebige organische Polyisocyanate mit einem NCO-Gehalt von 10 bis 50 Gew.-%, bzw. beliebige Gemische derartiger organischer Polyisocyanate mit einem NCO-Gehalt von 10 bis 50 Gew.-% eingesetzt werden.

Vorzugsweise werden Polyisocyanate mit aromatisch gebundenen Isocyanatgruppen verwendet. Hierzu gehören beispielsweise 2,4-Diisocyanatotoluol, 2,6-Diisocyanatotoluol, wie z.B. 1,2-Bis-(4-isocyanatophenyl)-ethan, Alkyl-, insbesondere Methyl-substituierte Diisocyanatodiphenylmethane der beispielsweise in EP-A 24 665 oder 46 556 beschriebenen Art und insbesondere Polyisocyanate bzw. Polyisocyanatgemische der Diphenylmethanreihe. Beliebige Gemische derartiger Polyisocyanate können beim erfindungsgemäßen Verfahren ebenfalls verwendet werden. Bei den besonders bevorzugt einzusetzenden Polyisocyanaten oder Polyisocyanat-Gemischen handelt es sich um solche der Diphenylmethanreihe wie 4,4'-Diisocyanatodiphenylmethan, dessen Gemische mit 2,4'- und gegebenenfalls 2,2'-Diisocyanatodiphenylmethan mit einem Gehalt, bezogen auf Gesamtgemisch, an 2,4'-Diisocyanatodiphenylmethan von bis zu 70 Gew.-%, vorzugsweise bis zu 20 Gew.-%, wobei der Gehalt an 2,2'-Diisocyanatodiphenylmethan im allgemeinen 5 Gew.-% nicht übersteigt, um Polyisocyanatgemische, wie sie durch Phosgenierung von Anilin/Formaldehyd-Kondensaten erhalten werden, und die neben Diisocyanatodiphenylmethan-Isomeren der genannten Art unterschiedliche Mengen an höheren homologen Polyisocyanaten (im allgemeinen 5 bis 60 Gew.-%, bezogen auf Gesamtgemisch) enthalten können oder um Urethangruppen aufweisende Umsetzungsprodukte der zuletzt genannten Di- und/oder Polyisocyanate mit unterschüssigen Mengen an aliphatischen Polyhydroxylverbindungen des Molekulargewichtsbereichs 62-700 wie z.B. Ethylenglykol, Trimethylolpropan, Propylenglykol, Dipropylenglykol oder Polypropylenglykolen des genannten Molekulargewichtsbereichs oder um durch partielle Carbodiimidisierung der Isocyanatgruppen der zuletzt genannten Di- und/oder Polyisocyanate modifizierte Di- und/oder Polyisocyanate.

Zu den besonders bevorzugten Ausgangsmaterialien A) gehören z.B. die bei Raumtemperatur flüssigen Derivate des 4,4'-Diisocyanatodiphenylmethans, beispielsweise die Urethangruppen aufweisenden Polyisocyanate, die gemäß DE-PS 1 618 380 (US-PS 3 644 457) durch Umsetzung von 1 Mol 4,4'-Diisocyanatodiphenylmethan mit 0,05 bis 0,3 Molen an niedermolekularen Diolen oder Triolen, vorzugsweise Polypropylenglykolen mit einem unter 700 liegenden Molekulargewicht, zugänglich sind, oder die Carbodiimid- und/oder Uretonimingruppen aufweisenden Diisocyanate auf Basis von 4,4'-Diisocyanatodiphenylmethan, wie sie beispielsweise gemäß US-PS 3 152 162, US-PS 3 384 653, US-PS 3 449 256, DE-OS 2 537 685 oder EP-OS 5233 (US-Anmeldung 903 308) zugänglich sind. Auch die entsprechenden Modifizierungsprodukte auf Basis von Gemischen aus 2,4'- und 4,4'-Diisocyanatodiphenylmethan oder auch Gemische der wie beschrieben modifizierten 4,4'-Diisocyanatodiphenylmethane mit untergeordneten Mengen an höher als difunktionellen Polyisocyanaten der Diphenylmethanreihe, beispielsweise solche der in DE-OS 2 624 526 beschriebenen Art, gehören zu den besonders bevorzugten Polyisocyanaten. Im allgemeinen handelt es sich bei den bevorzugten, erfindungsgemäß einzusetzenden Polyisocyanaten um bei Raumtemperatur flüssige, gegebenenfalls wie beschrieben chemisch modifizierte Polyisocyanate bzw. Polyisocyanatgemische der Diphenylmethanreihe einer (mittleren) NCO-Funktionalität von 2-2,2, insbesondere von 2, in denen als Hauptkomponente (mehr als 50 Gew.-%) 4,4'-Diisocyanatodiphenylmethan vorliegt.

Gegebenenfalls werden als Polyisocyanate derartige Polyisocyanate bzw. Polyisocyanatgemische der Diphenylmethanreihe, gegebenenfalls in Abmischung mit bis zu 50 NCO-Äquivalentprozent, bezogen auf Gesamtgemisch, an anderen aromatischen Polyisocyanaten eingesetzt. Besonders bevorzugt werden jedoch die genannten Polyisocyanate bzw. Polyisocyanatgemische der Diphenylmethanreihe als ausschließliche Polyisocyanat-Komponente verwendet.

Bei den Verbindungen B1) mit gegenüber Isocyanatgruppen reaktionsfähigen Gruppen handelt es sich um Polyether oder Polyester des Molekulargewichtsbereichs 500 bis 20.000, vorzugsweise 1.000 bis 7.000, die mindestens 2, vorzugsweise endständig angeordnete gegenüber Isocyanatgruppen reaktionsfähige Gruppen aufweisen. Bei diesen gegenüber Isocyanatgruppen reaktionsfähigen Gruppen handelt es sich um an primäre oder sekundäre Kohlenstoffatome gebundene alkoholische Hydroxylgruppen und/oder um aromatisch oder (cyclo)aliphatisch gebundene primäre oder sekundäre, vorzugsweise primäre Aminogruppen. Die genannten Molekulargewichte können beispielsweise dampfdruckosmometrisch bestimmt werden.

Als Komponente B1) kommen somit die den gemachten Angaben entsprechenden, aus der Polyurethanchemie an sich bekannten Aminopolyether, Aminopolyester, Polyetherpolyole und/oder Polyesterpolyole oder deren Gemische in Betracht. Gut verwendbar sind selbstverständlich auch solche Polyether oder Polyester, die sowohl Amino- als auch Hydroxylgruppen aufweisen.

Als als Komponente B1) geeignete Polyetherpolyole kommen die aus der Polyurethanchemie an sich bekannten Alkoxylierungsprodukte von geeigneten Startermolekülen unter Verwendung von Ethylenoxid und/oder Propylenoxid in Betracht, wobei die genannten Alkylenoxide sowohl im Gemisch als auch sukzessive bei der Herstellung der Alkoxylierungsprodukte verwendet werden können. Geeignete Startermoleküle sind beispielsweise Wasser, einfache, mehrwertige Alkohole wie 1,2-Dihydroxyethan, 1,2-Dihydroxypropan, 1,3-Dihydroxypropan, 1,4-Dihydroxybutan, 1,6-Dihydroxyhexan, Trimethylolpropan, Glycerin, Pentaerythrit, Rohrzucker oder beliebige Gemische derartiger Startermoleküle, wobei bei der Verwendung von festen Startermolekülen wie z.B. Rohrzucker im allgemeinen gleichzeitig verflüssigende, niederfunktionelle Startermoleküle der beispielhaft genannten Art gleichzeitig mitverwendet werden.

Als als Komponante B1) geeignete Polyesterpolyole kommen die aus der Polyurethanchemie an sich bekannten in Betracht, beispielsweise die Umsetzungsprodukte von mehrbasischen Carbonsäuren wie Adipinsäure, Phthalsäure, Tetrahydrophthalsäure und/oder Hexahydrophthalsäure mit überschüssigen Mengen an einfachen, mehrwertigen Alkoholen der zuletzt beispielhaft genannten Art.

Als als Komponente B1) geeignete Polyester oder Polyether, die als gegenüber Isocyanatgruppen reaktionsfähige Gruppen Aminogruppen der oben beispielhaft genannten Art neben gegebenenfalls ebenfalls vorliegenden Hydroxylgruppen aufweisen, kommen ebenfalls die aus der Polyurethanchemie an sich bekannten Verbindungen in Betracht. Zur Herstellung dieser Aminopolyether bzw. -polyester werden im allgemeinen Polyetherpolyole oder Polyesterpolyole der zuletzt beispielhaft genannten Art durch zumindest teilweisen Ersatz der Hydroxylgruppen durch Aminogruppen chemisch modifiziert. Derartige Verfahren zur Herstellung von Aminopolyethern bzw. -estern sind beispielsweise in DE-AS 1 270 046 (Umsetzung der Ausgangspolyole mit überschüssigen Mengen an organischen Polyisocyanaten und anschließende Überführung der so eingeführten endständigen Isocyanatgruppen durch Reaktion mit sekundären oder tertiären Carbinolen und thermische Spaltung der resultierenden Urethane), DE-AS 1 694 152 (Umsetzung der zuletzt genannten NCO-Prepolymeren mit überschüssigen Mengen an organischen Diaminen), FR-PS 1 415 317 (Überführung der NCO-Gruppen der genannten NCO-Prepolymeren in Aminogruppen durch Reaktion mit Ameisensäure und anschließende Verseifung der N-Formylderivate), DE-AS 1 555 907 (Umsetzung der genannten NCO-Prepolymeren mit Sulfaminsäure) beschrieben. Gut geeignet sind auch die Verfahrensprodukte der DE-AS 1 215 373, der BE-PS 634 741 oder der US-PS 3 654 370, d.h. die Umsetzungsprodukte von Polyetherpolyolen oder Polyesterpolyolen mit Ammoniak in Gegenwart von Katalysatoren und gegebenenfalls Wasserstoff. Weitere Verfahren zur Herstellung von erfindungsgemäß als Komponente B1) geeigneten Aminopolyethern oder -polyestern sind beispielsweise in den Deutschen Offenlegungsschriften 2 948 419, 30 39 600, 31 12 118, 31 31 252, 32 00 021, 31 44 991, 31 44 874, 32 23 395, 32 23 400, 2 546 536, 2 019 432, 2 619 840, 2 648 774, 2 648 825, 30 35 639, den US-Patentschriften 3 044 989, 3 865 791, 4 180 644, 2 888 439 oder der Deutschen Auslegeschrift 1 193 671 beschrieben.

Besonders bevorzugt werden als Komponente B1) Aminopolyester und insbesondere Aminopolyether eingesetzt, die durch thermische Spaltung von Carbamaten gemäß DE-OS 3 131 252 oder durch Druckaminierung von Polyolen gemäß den obengenannten Veröffentlichungen hergestellt worden sind. Diese bevorzugt beim erfindungsgemäßen Verfahren einzusetzenden Aminopolyester und insbesondere Aminopolyether weisen im allgemeinen im statistischen Mittel pro Molekül 2-6, vorzugsweise 2-3 gegenüber Isocyanatgruppen reaktionsfähige Gruppen auf, die ihrerseits zumindest zu 50 %, vorzugsweise zumindest zu 80 % aus primären oder sekundären, vorzugsweise primären Aminogruppen bestehen, die, den obengemachten Ausführungen entsprechend, sowohl an aromatische als auch an (cyclo)aliphatische Kohlenstoffe gebunden sein können. Das Molekulargewicht dieser bevorzugten Aminopolyester und insbesondere -polyether liegt im allgemeinen bei 1000 bis 7000, insbesondere bei 2.000 bis 6.000.

Bei der Komponente B2) handelt es sich um Verbindungen der oben bereits unter a) bis e) genannten Art bzw. um beliebige Gemische derartiger Verbindungen.

Geeignete Verbindungen a) sind beliebige aromatische Di- oder Triamine des Molekulargewichtsbereichs 108 bis 499 mit primären oder sekundären, vorzugsweise mit primären Aminogruppen. In Betracht kommen beispielsweise gegebenenfalls alkylsubstituierte Phenylendiamine oder gegebenenfalls alkylsubstituierte Diaminodiphenylalkane, die an jedem aromatischen Ring eine vorzugsweise primäre Aminogruppe aufweisen, wie z.B. 1,2-, 1,3- oder 1,4-Diaminobenzol, 2,4- oder 2,6-Diaminotoluol, 2,4-Dimethyl-, 2,4-Diethyl-, 2,4-Diisopropyl- oder 2,4-Di-t-butyl-1,3-diaminobenzol, 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, beliebige technische Gemische der beiden letztgenannten Diamine, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1-t-Butyl-3,5-dimethyl-2,6-diaminobenzol, 4,4'-Diaminodiphenylmethan, 4,4'-Diaminodiphenylpropan-2,2, 3,5-Diisopropyl-5'-diethyl-4,4'-diaminodiphenylmethan, 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-3,3',5-Triethyl-5'-sek.-butylbutyl-4,4'-diaminodiphenylmethan, 3,3'-Diethyl-5,5'-diisopropyl-, 3,3'-Dimethyl-5,5'-di-sek.-butyl, 3,3'-Dimethyl-5,5'-di-sek.-butyl-, 3,3'-Diethyl-5,5'-di-sek.-butyl-, 3,5-Dimethyl-3',5'-diisopropyl-,3,5-Diethyl-3',5'-diisopropyl-, 3,5'-Dimethyl-3',5-di-sek.-butyl-,3,5'-Diethyl-3',5'-di-sek.-butyl-, 3-Methyl-3',5,5'-triisopropyl-, 3-Ethyl-3',5,5'-triisopropyl, 3-Methyl-3',5,5'-tri-sek.-butyl-, 3-Ethyl-3',5,5'-tri-sek.-butyl-, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert-butyl-3',5'-diisopropyl-, 3-Ethyl-5-sek.-butyl-3'-methyl-5'-tert.-butyl-, 3,3',5,5'-Tetraisopropyl- und/oder 3,3',5,5'-Tetra-sek.-butyl-4,4'-diaminodiphenylmethan. Die Herstellung solcher unsymmetrisch substituierter Tetraalkyl-diphenylmethandiamine bzw. ihrer Produktgemische mit den symmetrisch substituierten Tetraalkyl-diphenylmethandiaminen wird beispielsweise in der DE-A 29 20 501 beschrieben.

Es können auch Trialkyl-substituierte Diphenylmethandiamine eingesetzt werden, wie z.B. 3,5,3'-Triisopropyl- oder 3,5-Diisopropyl- 3'-ethyl-4,4'-diaminodiphenylmethan oder auch disubstituierte Diamine wie 3,3'-Diisopropyl-4,4'-diamino-diphenylmethan, sowie analoge monosubstituierte Diamine. Gut geeignet sind Produktgemische von ca. 45 bis 70 Gew.-% 3,5-Diethyl-3',5'-diisopropyl-diphenylmethan-4,4'-diamin und 27,5 bis 15 Gew.-% 3,5,3',5'- Tetraethyl-diphenylmethan-4,4'-diamin und 27,5 bis 15 Gew.-% an 3,5,3',5'-Tetra-isopropyl-diphenylmethan-4,4'-diamin.

Weitere, als Komponente a) geeignete aromatische Di- oder Triamine sind beispielsweise Tris-(4-aminophenyl)methan, 1,5-Diaminonaphthalin, flüssige Polyamingemische der Diphenylmethan-Reihe, wie sie durch Anilin/Formaldehyd-Kondensation erhalten werden, Heteroatome aufweisende aromatische Polyamine wie z.B. gegebenenfalls $C_1$-$C_{12}$-Alkylsubstituenten aufweisende 3,5-Diaminobenzoesäure-$C_1$-$C_{10}$-alkylester, 3,3'-Dichlor-4,4'-diaminodiphenylmethan oder 4,4'-Diaminodiphenylsulfid oder auch sekundäre Aminogruppen aufweisende Polyamine wie beispielsweise 4,4'-Di-(methylamino)-diphenylmethan. Grundsätzlich können beliebige Gemische der beispielhaft genannten Polyamine Verwendung finden.

Besonders bevorzugt werden bei Raumtemperatur mit der Komponente B1) gut mischbare diprimäre aromatische Diamine, insbesondere 1,3-Diaminobenzole, eingesetzt, deren Molekulargewicht innerhalb des obengenannten Bereichs liegt, und die zumindest in jeweils einer ortho-Stellung zu den Aminogruppen einen Alkylsubstituenten aufweisen, insbesondere solche, die in ortho-Stellung zu der ersten Aminogruppe mindestens einen Alkylsubstituenten und in ortho-Stellung zur zweiten Aminogruppe zwei Alkylsubstituenten mit 1 bis 4, vorzugsweise 1 bis 3 Kohlenstoffatomen, die mit dem ersten Alkylsubstituenten nicht identisch sind, aufweisen, besonders bevorzugt solche, die in jeweils einer ortho-Stellung zu den Aminogruppen einen Ethyl-, n-Propyl-Isopropyl- und/oder t.-Butyl-Substituenten und gegebenenfalls in weiteren ortho-Stellungen zu den Aminogruppen Methylsubstituenten aufweisen.

Als Komponente b) kommen beliebige (cyclo)aliphatische Di- und/oder Triamine des Molekulargewichtsbereichs 60 bis 499 in Betracht wie z.B. 1,2-Diaminoethan, 1,2-Diaminopropan, 1,3-Diaminopropan, 1,4-Diaminobutan, 1,5-Diaminopentan, 1,6-Diaminohexan, 2,2,4-Trimethyl-1,6-diaminohexan, 1,7-Diaminoheptan, 1,8-Diaminooctan, 1,10-Diaminodecan, 1,11-Diaminoundecan, 1,12-Diaminododecan; oder Heteroatome aufweisende Diamine wie 1,5-Diamino-3-oxapentan, 1,8-Diamino-3,6-dioxaoctan, 1,11-Diamino-3,6,9-trioxaundecan, 1,13-Diamino-4,9-dioxatridecan, 1,9-Diamino-5-oxanonan, 5-Amino-2,2,4-trimethyl-1-cyclopentanmethylamin, 5-Amino-1-amino-methyl-1,3,3-trimethylcyclohexan (Isophorondiamin), 1,4-Diaminocyclohexan, 1,3-Diaminocyclohexan, 1,8-Diamino-p-menthan, 3-Aminoethyl-1-(3-aminopropyl-1-methyl)-4-methylcyclohexan, 1-Methyl-2,6-diaminocyclohexan, 1-Methyl-2,4-diaminocyclohexan, 4,4'-Diamino-dicyclohexylmethan, sowie seine 2,4'- bzw. 2,2'-Isomeren, 4,4'-Diamino-3,3'-dimethyldicyclohexylmethan sowie seine 2,4'- und 2,2'-Diamino-Isomeren, 4,4'-Diaminodicyclohexylethan, 4,4'-Diaminodicyclohexylether, Bis-(4'-aminocyclohexyl)-propan-(2,2), 4,4'-Diamino-dicyclohexan, 4,4'-Diamino-3,3'-diethyldicyclohexylmethan, 1,1-Di-(4'-aminocyclohexyl)-cyclohexan, 1,1-Di-(4'-amino-3'-methylcyclohexyl)-cyclohexan, 4,4'-Diamino-3,5-diethyl-3',5'-diisopropyldicyclohexylmethan, 4,4'-Diamino-3,3',5,5'-tetraethyl-dicyclohexylmethan: tertiäre Aminogruppen enthaltende Di- oder Polyamine, z.B. Bis-(3-aminopropyl)-methylamin, N,N'-Bis-(2-amino-ethyl)-piperazin, N,N'-Bis-(3-aminopropyl)-piperazin; Diamine mit sekundären Aminogruppen, z.B. N-Methylethylendiamin, N,N'-Diethyl-ethylendiamin, N,N'-Dibutyl-hexamethylendiamin, Piperazin, 2,5-Dimethyl-piperazin, sowie N,N'-Diaminopiperazin. Gut geeignet als Komponente b) sind auch niedermolekulare "Aminopolyether", die Homologe der unter B1) beispielhaft genannten höhermolekularen Aminopolyether darstellen, jedoch ein unter 500 liegendes Molekulargewicht aufweisen. Es können aber auch Verbindungen mit 3 oder 4, sowie gegebenenfalls noch mehr primären und/oder sekundären Aminogruppen verwendet werden, z.B. 1,6,11-Triaminoundecan, 1,5-Di-amino-3-aza-pentan,1,8-Diamino-3,6-diaza-octan, 1,11-Diamino-3,6,9-triaza-undecan, 1,14-Diamino-3,6,9,12-tetraaza-tetradecan, 1,7-Diamino-4-aza-heptan, 1,11-Diamino-4,8-diaza-undecan, 1,13-Diamino-7-methyl-7-aza-tridecan, 1,3,5-Triaminocyclohexan. Ferner kommen Diamino-perhydroanthrazene (DE-OS 2 638 731) und cycloaliphatische Triamine gemäß DE-OS 2 614 244 in Betracht.

Zu den bevorzugten Ausgangskomponenten b) gehören 1,6-Diaminohexan, sowie die beispielhaft genannten cycloaliphatischen Diamine.

Als erfindungsgemäß in Betracht kommende Ausgangskomponenten c) sind beliebige Aminoalkohole des Molekulargewichtsbereichs 61 bis 499, die mindestens eine alkoholische Hydroxylgruppe und mindestens eine primäre oder sekundäre Aminogruppe aufweisen, geeignet. Beispiele hierfür sind 2-Aminoethanol, 2-Methyl-2-aminoethanol, 2-Ethyl-2-aminoethanol, 6-Methyl-3-oxa-6-aza-heptanol, 6-Hydroxyhexylamin, Bis-β-hydroxyethyl-amin, Bis-(β-hydroxyethyl)-metylamin, Bis-(β-hydroxyethyl)-butylamin, Bis-(β-hydroxyethyl)-oleylamin, Bis-(β-hydroxypropyl)-amin, Bis-(β-hydroxypropyl)-methylamin, Bis-(β-hydroxypropyl)-hexylamin, N,N,N'-Tris-(β-hydroxypropyl)-ethylendiamin, 3-Aminomethyl-3,5,5-trimethylcyclohexanol, 2-Amino-2-hydroxymethyl-1,3-propandiol, 2-Amino-2-methyl-1,3-propandiol oder 2-Amino-2-methylpropanol, N-(β-hydroxyethyl)-ethylendiamin, N-(β-hydroxyethyl)-propylendiamin-1-2, N-(β-hydroxyethyl)-propandiamin-1-3, N-(β-hydroxyethyl)-hexandiamin-1,6-N-(β-hydroxyethyl)-dodecandiamin-1,12, N-(β-hydroxypropyl)-ethylendiamin, N-(β-hydroxypropyl)-propylendiamin-1,2, N-(β-hydroxypropyl)-propylendiamin-1,3, N-(β-hydroxybutyl)-ethylendiamin, N-(β-hydroxyethyl)-xylylendiamin-1,3, N-(β-hydroxyethyl)-cyclohexandiamin-1,3 oder -1,4, N-(β-hydroxyethyl)-2,2,4-tri-methylhexylendiamin-1,6, 1-Methyl-2-amino-4-[N-(2-hydroxyethyl)-amino]-cyclohexan, N-(β-hydroxyethyl)-isophoron-diamin, N,N'-Bis-(β-hydroxyethyl)-ethylendiamin, N,N'-Bis-(β-hydroxypropyl)-ethylendiamin, N,N'-Bis-(β-hydroxyethyl)-propylendiamin-1,2, N,N'-Bis-(β-hydroxypropyl)-1-methyl-2,6-bzw. -2,4-diamino-cyclohexan, N,N'-Bis-(β-hydroxypropyl)-p-xylylendiamin, N-(β-hydroxyethyl)-N'-(β-hydroxypropyl)-ethylendiamin, 1,3-Diamino-propanol-2, 1,6-Diamino-hexanol-2, 1,5-Diaminopentanol-3, 3,4-Diamino-2,2-dimethylbutanol-1, die Diaminocyclohexanole oder 1,11-Diaminoundecanol-6.

Als erfindungsgemäß in Betracht kommende Ausgangsmaterialien d) sind beliebige, mindestens zweiwertige, gegebenenfalls Ether- oder Estergruppen aufweisende Alkohole des Molekulargewichtsbereichs 62 bis 499, die, von den alkoholischen Hydroxylgruppen abgesehen, keine weiteren gegenüber Isocyanatgruppen reaktionsfähigen Gruppen aufweisen. Beispiele hierfür sind 1,2-Dihydroxyethan, 1,2-Dihydroxypropan, 1,4-Dihydroxybutan, 1,6-Dihydroxyhexan, Trimethylolpropan oder Glycerin.

Als Ausgangsmaterialien e) sind z.B. Hydrazin, Methylhydrazin, Ethylhydrazin, N,N'-Dimethylhydrazin oder N,N'-Diethylhydrazin oder Carbonsäurehydrazide wie z.B. Adipinsäure-bis-hydrazid geeignet.

Bei der Komponente C) handelt es sich vorzugsweise um freies, flüssiges Wasser. Das Wasser kann jedoch auch in Form von Wasser in gebundener Form (z.B. Kristallwasser) aufweisender Verbindungen oder in Form von unter den Reaktionsbedingungen wasserabspaltenden Verbindungen (Wasser in statu nascendi) eingesetzt werden. In der DE-AS 1 101 394 sind beispielsweise derartige Verbindungen beschrieben,

Zur Herstellung der Polyisocyanat-Zubereitungen werden die Ausgangskomponenten B) vorzugsweise so ausgewählt, daß die gegenüber Isocyanatgruppen reaktionsfähigen Gruppen der in der Komponente B) vorliegenden Verbindungen zu höchstens 75, vorzugsweise zu höchstens 50 Äquivalentprozent aus Hydroxylgruppen und zum Rest aus aminischen oder hydrazinischen Aminogruppen bestehen. Im übrigen können, von dieser Einschränkung abgesehen, beliebige der beispielhaft genannten Verbindungen zu der Komponente B) vereinigt werden, die sich, wie bereits ausgeführt, aus den Einzelkomponenten B1) und gegebenenfalls B2) (= a), b), c), d) und/oder e)) zusammensetzt. Das Äquivalentverhältnis der gegenüber Isocyanatgruppen reaktionsfähigen Gruppen der Komponente B) zu Wasser (welches als difunktionelle Verbindung in die Berechnung eingeht) liegt bei 1:0,1 bis 1:10, vorzugsweise bei 1:0,5 bis 1:5. Die gegebenenfalls mitzuverwendende Komponente B 2) wird, falls überhaupt, in solchen Mengen eingesetzt, daß das Äquivalentverhältnis, bezogen auf die gegenüber Isocyanatgruppen reaktionsfähigen Gruppen von (B1 +C):B2) bei 1:0 bis 1:10, vorzugsweise bei 1:0,1 bis 1:2 und von B1:B2 bei 1:0 bis 1:5, vorzugsweise 1:0 bis 1:2 liegt.

Die Herstellung der Zubereitungen erfolgt vorzugsweise dergestalt, daß man zunächst durch Abmischen der Komponenten B1) und C), und gegebenenfalls B2) eine Reaktionskomponente herstellt, die dann mit der Polyisocyanatkomponente A) unter Einhaltung eines Äquivalentverhältnisses von Isocyanatgruppen zu gegenüber Isocyanatgruppen reaktionsfähigen Gruppen von 4:1 bis 50:1 innerhalb des Temperaturbereichs von 20 bis 140°C, vorzugsweise 20 bis 60°C zur Reaktion gebracht wird. Vorzugsweise wird dabei so vorgegangen, daß die Isocyanatkomponente A) vorgelegt und das NCO-reaktive Komponentengemisch unter Rühren kontinuierlich oder protionsweise zugegeben wird. Die Zugabegeschwindigkeit wird bevorzugt so gewählt, daß das Reaktionsgemisch nicht verquallt und rührbar bleibt.

Bevorzugt wird die Zugabe der NCO-reaktiven Komponente zur Isocyanatkomponente bei 20 bis 30°C, bevorzugt ohne externe Kühlung oder Erwärmung, vorgenommen. Während der Zugabe steigt die Temperatur, wenn nicht extern gekühlt oder erwärmt wird, auf ca. 40 - 60°C. Möglich, jedoch weniger bevorzugt ist es, die NCO-reaktiven Komponenten nacheinander mit der Isocyanat-Komponente zur Umsetzung zu bringen.

Nach Beendigung der Umsetzung weist das Reaktionsgemisch, in Abhängigkeit von Art und Mengenverhältnissen der Reaktionspartner eine Viskosität von ca. 20 bis ca. 100.000, vorzugsweise von 100 bis 10.000 mPa.s/25°C auf. Ebenfalls in Abhängigkeit von Art und Mengenverhältnissen der Ausgangskomponenten handelt es sich bei den so erhaltenen Reaktionsmischungen um klare Lösungen oder auch um fein- oder grobdisperse Systeme. Während die klaren Lösungen als solche der erfindungsgemäßen Verwendung zugeführt werden können, ist im Falle des Vorliegens von dispersen Systemen oftmals eine thermische Nachbehandlung angezeigt. Hierzu wird das fein- oder auch grobdisperse Reaktionsgemisch während des Zeitraums von 5 Minuten bis 10 Stunden, vorzugsweise 30 Minuten bis 6 Stunden bei 20 bis 140°C, vorzugsweise 60 bis 135°C und insbesondere 80 bis 130°C gerührt. Besonders geeignet ist eine Arbeitsweise, bei welcher die Temperatur während der Nachbehandlung kontinuierlich oder stufenweise innerhalb der genannten Bereiche erhöht wird. Bei dieser thermischen Nachbehandlung kommt es zur Auflösung von dispergierten Teilchen unter gleichzeitiger Viskositätserniedrigung der Systeme. Es wird vermutet, daß hierbei eine chemische Überführung der zunächst vorliegenden Harnstoffgruppen in Biuretgruppen durch Reaktion mit überschüssigen Isocyanatgruppen eine wesentliche Rolle spielt. Die thermische Nachbehandlung führt zu klaren oder extrem feindispersen Polyisocyanat-Zubereitungen, die ohne Schwierigkeiten der erfindungsgemäßen Verwendung zugeführt werden können. Die ohne thermische Nachbehandlung erhaltenen klaren Lösungen und auch die mit der thermischen Nachbehandlung erhaltenen klaren bzw. feindispersen Systeme weisen vorzugsweise einen NCO-Gehalt von 18 bis 28 Gew.-% und eine Viskosität bei 25° C von ca. 20 bis ca. 10.000 mPa.s auf.

Die erfindungsgemäßen Zubereitungen können vorteilhafterweise, gegebenenfalls im Gemisch mit anderen Polyisocyanaten der aus der Polyurethanchemie an sich bekannten Art zur Herstellung von Formkunststoffen nach der "RIM-Technologie" verwendet und zwar sowohl zur Herstellung von harten, halbharten und weichen Integralschaumstoffen, als auch zur Herstellung der entsprechenden massiven, d.h. allenfalls mikrozellularen Formkörpern einer zwischen 0,8 und 1,4, vorzugsweise 0,9 bis 1,2 g/cm³ liegenden Rohdichte.

Bei dieser erfindungsgemäßen Verwendung kommen die erfindungsgemäßen Zubereitungen anstelle oder in Abmischung mit den hierzu üblicherweise eingesetzen Polyisocyanaten zum Einsatz. Dies bedeutet insbesondere, daß bei der erfindungsgemäßen Verwendung die Reaktionspartner und Hilfsstoffe für die erfindungsgemäßen Zubereitungen und auch die sonstigen Verfahrensparameter dem Stand der Technik entsprechen, wie er sich beispielsweise aus den Deutschen Offenlegungsschriften 1 953 637, 2 121 670, 2 356 692, 2 363 452, 2 404 310, 2 427 273, 2 431 968, 2 307 589, 2 319 648, 3 012 126 oder 3 147 736, den US-Patentschriften 4 065 410 oder 4 218 543 bzw. den offengelegten Europäischen Patentanmeldungen (Veröffentlichungsnummern) 17 928, 44 481 oder 81 701 ergibt.

Die erfindungsgemäßen Zubereitungen können selbstverständlich auch bei der Herstellung von anderen Polyurethankunststoffen, beispielsweise bei der Herstellung von freiverschäumten harten, halbharten oder weichen Polyurethanformstoffen vorteilhaft als Polyisocyanatkomponente anstelle oder in Abmischung mit den bislang hierfür eingesetzten Polyisocyanaten verwendet werden.

Die mit den erfindungsgemäßen Zubereitungen hergestellten Polyurethankunststoffe zeichnen sich durch ausgezeichnete mechanische Eigenschaften und verbesserte Wärmestandeigenschaften aus. Sie können grundsätzlich für die gleichen Anwendungsgebiete wie die Polyurethankunststoffe des Standes der Technik verwendet werden.

In den nachfolgenden Beispielen beziehen sich alle Prozentangaben auf Gewichtsprozente und alle Angaben in Teilen auf Gewichtsteile.

Beispiel 1

Ein Gemisch auf 2761 g 4,4'-Diisocyanatodiphenylmethan (MDI 44) und 5081 g eines Uretonimin-modifizierten 4,4'-Diisocyanatodiphenylmethan-Derivats (UI-MDI) des NCO-Gehalts 30 % wird bei RT vorgelegt. Bei dieser Temperatur wird innerhalb 25 Min. eine Mischung aus 2204 g eines Polyoxypropylenglykols mit endständigen Aminogruppen (®Jeffamine D 2000 der Texaco/Jefferson) des Molekulargewichts 2000 und 17,4 g Wasser unter Rühren zugegeben, wobei das Gemisch sich trübt, die Innentemperatur auf 40° C steigt und Gasentwicklung zu beobachten ist. Innerhalb von 75 min wird bis auf 125° C erhitzt, Klärung des trüben Reaktionsgemisches ist ab 80° C zu verfolgen. NCO-Gehalt 21,1 %. (theoretisch ohne Berücksichtigung einer eventuellen (teilweisen) Biuretisierung: 22,7 %).

Beispiel 2

Ein Gemisch aus 2761 g 4,4'-Diisocyanatodiphenylmethan (MDI 44) und 5081 g UI-MDI wird bei RT vorgelegt. Bei dieser Temperatur wird innerhalb von 30 min unter Rühren und $CO_2$-Entwicklung ein Gemisch aus 2204 g ᴿJeffamin D 2000 und 34,8 g Wasser zugegeben. 90 min wird auf 135° C erhitzt, abgekühlt und von geringen Mengen ungelöster Partikel abfiltriert. NCO-Gehalt 20,0 % (theoretisch ohne Berücksichtigung einer Biuretisierung 21,8 %).

Beispiel 3

Eine Gemisch aus 277,5 g 4,4'-Diisocyanatodiphenylmethan (MDI 44) und 511 g UI-MDI wird bei RT vorgelegt. Bei eines Innentemperatur von 40-60° C wird innerhalb von 10 min ein Gemisch aus 218 g eines Aminopolyethers mit aromatischen Aminogruppen und 1,5 g Wasser zugegeben. Innerhalb von 40 min wird bis 140° C erhitzt, worauf sich der trübe Reaktionsansatz geklärt hat. Es werden keine ungelösten Partikel beobachtet. NCO-Gehalt 21,8 %. (theoretisch ohne Berücksichtigung einer Biuretisierung 23,0 %).

Der in diesem Beispiel verwandte Aminopolyether wurde gemäß DE-OS 3 131 252 durch Hydrolyse eines NCO-Prepolymern des NCO-Gehaltes 3,6 % wie folgt hergestellt:

1 mol eines Polyoxypropylenglykols des Molekulargewichts 2000 wird mit 2 Mol 2,4-Diisocyanatotoluol während 3 Stunden bei 80 ° C zur Umsetzung gebracht. Anschließend wird das so erhaltene NCO-Prepolymer bei 80 ° C mit wäßriger Kalilauge unter Bildung des entsprechenden Aminopolyethers mit aromatisch gebundenen Aminogruppen hydrolysiert. Der Aminopolyether weist eine NH-Zahl von 47,2 mg KOH/g auf.

Beispiel 4

Ein Gemisch aus 260 g MDI 44 und 479 9 UI-MDI wird bei 35 ° C vorgelegt. Bei einer Innentemperatur von 40-60 ° C wird innerhalb von 10 min eine Mischung aus einem Aminopolyether und 1,4 g Wasser unter Rühren zugegeben, worauf eine Trübung auftritt. Innerhalb von 40 min wird bis zu einer Innentemperatur von 130 ° C erhitzt, wobei eine klare Lösung entsteht. NCO-Gehalt 22,0 % (theoretisch ohne Berücksichtigung einer Biuretisierung 23,0 %).

Der in diesem Beispiel verwandte Aminopolyether wurde gemäß DE-OS 3 131 252 durch Hydrolyse eines gedünnschichteten NCO-Prepolymeren des NCO-Gehalts 3,4 % wie in Beispiel 3 aufgeführt gewonnen, wobei jedoch der mit 2,4-Diisocyanatotoluol umgesetzte Polyether ein 1:1-Gemisch aus einem auf Propylenglykol und einem auf Trimethylolpropan gestarteten PO/EO-Mischpolyetherpolyol mit einer mittleren Funktionalität von 2,5 und eine durchschnittliche OH-Zahl von 56 darstellt.

Beispiel 5

Vorgelegt wird ein Gemisch aus 250 g MDI 44 und 460 g UI-MDI. Bei Raumtemperatur wird in 12 min ein 20 ° C aufweisendes Gemisch aus 190 g eines Polyoxypropylenglykols des MG's 2000 und 1,5 g Wasser, worauf eine Trübung des Reaktionsansatzes auftritt, zugegeben. Innerhalb von 2 h wird bis 140 ° C erhitzt, wodurch eine klare, partikelfreie Lösung entsteht, die beim Stehen bei Raumtemperatur (RT) wieder trübe wird. NCO-Gehalt 21,6% (theoretisch ohne Berücksichtigung von einer Biuretisierung 23,0%).

Beispiel 6

Vorgelegt wird ein Gemisch aus 250 g MDI 44 und 460 g UI-MDI. Bei Raumtemperatur wird dazu ein Raumtemperatur aufweisendes Gemisch aus 190 g eines Polyoxypropylenglykols des Molekulargewichts 2000, 10 g eines Gemischs aus 65 Teilen 1-Methyl-3,5-diethyl-2,4-diaminobenzol und 35 Teilen 1-Methyl-3,5-diethyl-2,6-diaminobenzol und 1,5 g Wasser zugegeben, worauf Trübung auftritt. Innerhalb von 4 h wird bis 140 ° C erhitzt, wodurch eine partikelfreie, klare Lösung entsteht, die beim Stehen bei RT klar bleibt. Die resultierende erfindungsgemäße Polyisocyanatzubereitung weist einen NCO-Gehalt von 20,5 % auf.

Anwendungsbeispiele

Zur Herstellung von Formteilen wurde eine 1-Kolben-Hochdruckdosieranlage mit MQ-Mischkopf (Maschinenfabriken Hennecke, St. Augustin) und Zwangssteuerung verwendet. Der Betriebsdruck betrug 200 bar.

Die in den nachstehenden Beispielen genannten Polyol- und Isocyanat-Komponenten werden unter Verwendung dieser Apparatur unter Einhaltung einer Isocyanatkennzahl von 105 ( = NCO/H-akt.-Äquivalentverhältnis x 100) innig miteinander vermischt und zu Formkunststoffen der in den Beispielen genannten mechanischen Eigenschaften verarbeitet. Die Rohstofftemperatur betrug hierbei 35-40 ° C, die Formtemperatur lag bei 60 ° C, als Form wurde eine solche aus poliertem Stahl der Innenabmessungen 200 x 300 x 4 mm verwendet, deren Innenwände mit einem äußeren Trennmittel auf Wachsbasis (®Acmos Fluoricon 36/34 der Firma Acmos) beschichtet waren. Die Einfüllzeit betrug ca. 1,25 Sekunden, die Standzeit lag bei ca. 60 Sekunden.

Beispiel 7

Polyolkomponente:
Gemisch aus:
77 Teilen eines Polyethertriols der OH-Zahl 28, erhalten durch Propoxylierung von Trimethylolpropan und anschließende Ethoxylierung des Propoxylierungsprodukts (PO:EO-Gew.-Verhältnis = 78:22)

23 Teilen eines Gemisches aus 65 Teilen 1-Methyl-3,5-diethyl-2,4-diaminobenzol und 35 Teilen 1-Methyl-3,5-diethyl-2,6-diaminobenzol, 0,3 Teilen Triethylendiamin und 0,10 Teilen eines handelsüblichen Zinnkatalysators (Katalysator UL 28 der Fa. Witco Co.).

Isocyanatkomponenten:
Beispiel 7a (Vergleich) handelsübliches Polyisocyanat des NCO-Gehalts 23 %, hergestellt durch Reaktion von MDI 44 mit Tripropylenglykol.
Beispiel 7b (erfindungsgemäß) Polyisocyanatzubereitung aus Beispiel 3.
Beispiel 7c (erfindungsgemäß) Polyisocyanatzubereitung aus Beispiel 4.

Mechanische Daten

| | Beispiel 7a | Beispiel 7b | Beispiel 7c | |
|---|---|---|---|---|
| Raumgewicht (DIN 53420) | 1095 | 1072 | 1081 | kg/m³ |
| Zugfestigkeit (DIN 53504) | 28,3 | 27,8 | 26,6 | MPa |
| Weiterreißfestigkeit (DIN 53515) (RT) | 53,4 | 49 | 82 | kN/m |
| Shore-D-Härte (DIN 53505) | 57 | 57 | 57 | |
| sag-Test[a] | 16 | 4,2 | 2,9 | mm |
| Biege-E-Modul (ASTM D-790) bei RT | 320 | 293 | 248 | MPa |
| bei 120°C | 95 | 187 | 171 | MPa |
| Faktor-Biegemodul RT/120°C | 3,4 | 1,6 | 1,5 | |
| HDT-Wert nach dem ISO R 75/B-Test (0,45 MPa) | 95 | 127 | 135 | °C |

a)General Motors-Prüfmethode, 100 mm Überhang, 1/2 h 160°C

## Patentansprüche

1. Verwendung von Harnstoff- und/oder Biuretgruppen aufweisenden Polyisocyanat-Zubereitungen, die einen NCO-Gehalt von 0,7 bis 45 Gew.-% aufweisen und die hergestellt werden, indem man

   A) organische Polyisocyanate mit einem NCO-Gehalt von 10 bis 50 Gew.-% oder Gemische von organischen Polyisocyanaten mit einem NCO-Gehalt von 10 bis 50 Gew.-% mit

11

B) organischen Verbindungen mit gegenüber Isocyanatgruppen reaktionsfähigen Gruppen und
C) Wasser

umsetzt, wobei die Komponenten A), B) und C) unter Einhaltung eines Äquivalentverhältnisses von Isocyanatgruppen der Komponente A) zu gegenüber Isocyanatgruppen reaktionsfähigen Gruppen der Komponenten B) und C) von 4 : 1 bis 50 : 1, und eines Äquivalentverhältnisses der gegenüber Isocyanatgruppen reaktionsfähigen Gruppen der Komponenten B) und C) von 1 : 0,1 bis 1 : 10 umgesetzt werden,

wobei die Komponente B) aus

B1) im Sinne der Isocyanat-Additionsreaktion mindestens difunktionellen Polyethern oder Polyestern des Molekulargewichtsbereichs 500 bis 20 000 mit alkoholischen, an primäre und/oder sekundäre Kohlenstoffatome gebundene Hydroxylgruppen und/oder mit aromatisch und/oder (cyclo)aliphatisch gebundenen, primären und/oder sekundären Aminogruppen oder aus Gemischen derartiger Verbindungen, gegebenenfalls in Abmischung mit
B2) organische Verbindungen des Molekulargewichtsbereichs 60 bis 499 mit mindestens zwei gegenüber Isocyanatgruppen reaktionsfähigen Gruppen

besteht, wobei ein Äquivalentverhältnis, bezogen auf die gegenüber Isocyanatgruppen reaktionsfähigen Gruppen von (B1 + C) : B2 von 1 : 0 bis 1 : 10 und von B1 : B2 von 1 : 0 bis 1 : 5 eingehalten wird, und wobei die gegebenenfalls mitverwendete Komponente B2) ausgewählt ist aus der Gruppe bestehend aus

a) aromatischen Di- oder Triaminen des Molekulargewichts 108 bis 499 mit primären oder sekundären Aminogruppen,
b) (cyclo)aliphatischen Di- und/oder Triaminen des Molekulargewichtsbereichs 60 bis 499 mit primären und/oder sekundären Aminogruppen,
c) organischen Verbindungen des Molekulargewichtsbereichs 61 bis 499, die im Sinne der Isocyanat-Additionsreaktion mindestens difunktionell sind und die sowohl (i) mindestens eine aromatisch und/oder (cyclo)aliphatisch gebundene primäre und/oder sekundäre Aminogruppe, als auch (ii) mindestens eine alkoholische, an ein primäres oder sekundäres Kohlenstoffatom gebundene Hydroxylgruppe aufweisen,
d) mindestens zweiwertigen, gegebenenfalls Ether- oder Estergruppen aufweisenden Alkoholen des Molekulargewichtsbereichs 60 bis 499
e) Hydrazin und seinen Derivaten, soweit sie mindestens zwei reaktive NH-Gruppen aufweisen, und
f) beliebigen Gemischen der unter a) bis e) genannten Verbindungen,

als Isocyanatkomponente bei der Herstellung von Formkunststoffen auf Basis von Polyisocyanat-Additionsprodukten einer Dichte von 0,8 bis 1,4 g/cm$^3$ nach der Reaktionsspritzgußtechnik.

## Claims

1. The use of polyisocyanate preparations containing urea and/or biuret groups and having an isocyanate content of from 0.7 to 45% by weight, prepared by the reaction of
A) organic polyisocyanates having an isocyanate content of from 10 to 50% by weight or mixtures of organic polyisocyanates having an isocyanate content of from 10 to 50% by weight with
B) organic compounds containing isocyanate reactive groups and
C) water,
components A), B) and C) being reacted together at an equivalent ratio of isocyanate groups of component A) to isocyanate reactive groups of components B) and C) of from 4:1 to 50:1 and an equivalent ratio of isocyanate reactive groups of components B) and C) of from 1:0.1 to 1:10, component B) consisting of
B1) polyethers or polyesters in the molecular weight range of from 500 to 20,000 which are at least difunctional in isocyanate addition reactions and have alcoholic hydroxyl groups attached to primary and/or secondary carbon atoms and/or have aromatically and/or (cyclo)aliphatically bound primary and/or secondary amino groups, or of mixtures of such compounds, optionally together with
B2) organic compounds in the molecular weight range of from 60 to 499 having at least two isocyanate reactive groups,
an equivalent ratio, based on the isocyanate reactive groups, of (B1 + C) : B2 of from 1 : 0 to 1 : 10 and of B1 : B2 of from 1 : 0 to 1 : 5 being maintained and the component B2) optionally used being selected from

EP 0 211 270 B1

a) aromatic di- or triamines in the molecular weight range of from 108 to 499 containing primary or secondary amino groups,

b) (cyclo)aliphatic di- and/or triamines in the molecular weight range of from 60 to 499 having primary and/or secondary amino groups,

c) organic compounds in the molecular weight range of from 61 to 499 which are at least difunctional in isocyanate addition reactions and contain both (i) at least one aromatically and/or (cyclo)-aliphatically bound primary and/or secondary amino group and (ii) at least one alcoholic hydroxyl group attached to a primary or secondary carbon atom,

d) alcohols in the molecular weight range of from 60 to 499 which are at least divalent and optionally contain ether or ester groups,

e) hydrazine and its derivatives, provided they have at least two reactive NH groups, and

f) any mixtures of the compounds mentioned under a) to e),

as isocyanate component for the production of moulded synthetic resins based on polyisocyanate addition products and having a density of from 0.8 to 1.4 g/cm$^3$ by the reaction injection moulding technique.

**Revendications**

1. Utilisation de compositions de polyisocyanate présentant des groupes urée et/ou biuret et ayant une teneur en NCO de 0,7 à 45% en poids, obtenues en faisant réagir

A) des polyisocyanates organiques ayant une teneur en NCO de 10 à 50% an poids ou des mélanges de polyisocyanates organiques ayant une teneur en NCO de 10 à 50% en poids, avec

B) des composés organiques contenant des groupes réactifs vis-à-vis des groupes isocyanate, et

C) de l'eau,

les composants A), B) et C) réagissant en respectant un rapport de 4:1 à 50:1 entre les équivalents des groupes isocyanate du composant A) et les équivalents des groupes des composants B) et C) réactifs vis-à-vis des groupes isocyanate, et un rapport de 1:0,1 à 1:10 des équivalents des groupes réactifs vis-à-vis des groupes isocyanate des composants B) et C), le composant B) étant composé de

B1) des polyéthers ou des polyesters au moins bifonctionnels dans le sens de la réaction d'addition des isocyanates et de poids moléculaires de 500 à 20.000 avec des groupes hydroxyle alcooliques liés à des atomes de carbone primaires et/ou secondaires et/ou avec des groupes amino primaires et/ou secondaires fixés sur des fragments ou radieaux aromatiques et/ou (cyclo)aliphatiques, ou des mélanges de composés de ce genre, éventuellement en mélange avec

B2) des composés organiques de poids moléculaires de 60 à 499 avec au moins deux groupes réactifs vis-à-vis des groupes isocyanate,

un rapport des équivalents par rapport aux groupes réactifs vis-à-vis des groupes isocyanate de 1:0 à 1:10 pour (B1 + C) : B2 et de 1:0 à 1:5 pour B1 : B2 étant respecté, et le composant B2) éventuellement utilisé aussi étant choisi dans le groupe comportant

a) des di- ou triamines aromatiques de poids moléculaires de 108 à 499 avec des groupes amino primaires ou secondaires,

b) des di- ou triamines (cyclo)aliphatiques de poids moléculaires de 60 à 499 avec des groupes amino primaires et/ou secondaires,

c) des composés organiques de poids moléculaires de 61 à 499, qui sont au moins bifonctionnels dans le sens de la réaction d'addition des isocyanates et qui présentent, tant (i) au moins un groupe amino primaire et/ou secondaire fixé sur des fragments ou radicaux aromatiques et/ou (cyclo)-aliphatiques, que (ii) au moins un groupe hydroxyle alcoolique lié à un atome de carbone primaire ou secondaire,

d) des alcools au moins bifonctionnels, présentant éventuellement des groupes éther ou ester, de poids moléculaires de 60 à 499

e) l'hydrazine et ses dérivés, pour autant qu'ils présentent au moins deux groupes NH réactifs, et

f) des mélanges quelconques des composés cités sous a) à e),

comme composants isocyanate pour la fabrication de matières synthétiques moulées à base de produits d'addition de polyisocyanates d'une masse volumique de 0,8 à 1,4 g/cm$^3$ selon la technique du moulage réactif par injection.

13